# EUROPEAN PATENT APPLICATION

(11) **EP 4 797 737 A1**
(43) Date of publication of application: **26.08.2026**
(21) Application number: 24884666.9
(22) Date of filing: 28.10.2024
(51) Int. Cl.: H04W 4/06

(54) **COMMUNICATION METHOD, APPARATUS AND SYSTEM**

(30) Priority: 31.10.2023 CN 202311444598
(71) Applicant: HUAWEI TECHNOLOGIES CO., LTD., Shenzhen 518129 (CN)
(72) Inventor: WU, Wenbin, Shenzhen, Guangdong 518129 (CN); ZHANG, Haisen, Shenzhen, Guangdong 518129 (CN); CHEN, Lei, Shenzhen, Guangdong 518129 (CN); SHI, Yulong, Shenzhen, Guangdong 518129 (CN)
(74) Representative: Maiwald GmbH
(86) International application number: PCT/CN2024/127794
(87) International publication number: WO 2025/092663

(57) **Abstract**

A communication method, apparatus, and system are provided. The method may be applied to a communication system including a plurality of network nodes. In the method, a first network node may obtain an uplink user plane address of a second network node through a message, where the first network node may be understood as a donor network node; and then send the uplink user plane address of the second network node to a child node of the second network node, that is, a third network node. In this way, the third network node may send uplink user plane data, for example, uplink feedback data, to the second network node based on the uplink user plane address of the second network node, where a receiving status of downlink data may be fed back through the uplink feedback data. According to the method, the network nodes in the communication system can not only establish a user plane tunnel with the first network node, but also establish a user plane tunnel with the second network node, thereby reducing processing pressure of the first network node, and improving flexibility of data transmission in the communication system.

## Description

### CROSS-REFERENCE TO RELATED APPLICATIONS

This application claims priority to Chinese Patent Application No. 202311444598.9, filed with the China National Intellectual Property Administration on October 31, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

A multicast broadcast service (multicast broadcast service, MBS) is a service for a plurality of terminal devices (user equipments, UEs), for example, a live streaming service, a public security service, and a batch software update service. The MBS is from a data server. First, the data server sends MBS data to a core network device, then the core network device sends the MBS data to a base station, and finally the base station sends the MBS data to at least one UE that receives the MBS data. When sent from the core network device to the base station, the MBS is transmitted through a common transmission channel, that is, an MBS session, and each MBS session may include at least one MBS quality of service (quality of service, QoS) flow. When sent from the base station to the UE, a data packet is transmitted through an MBS radio bearer. For one MBS radio bearer, there are two transmission modes: point-to-multipoint (point-to-multipoint, PTM) and point-to-point (point-to-point, PTP).

In a 5th generation (5th generation, 5G) communication system, a central unit (central unit, CU)-distributed unit (distributed unit, DU) base station architecture is introduced. Currently, in the CU-DU architecture, an integrated access and backhaul (integrated access and backhaul, IAB) technology is used for relay backhaul. However, in a data transmission processing method in a current IAB communication architecture, only a unicast service is considered. To be specific, service data transmitted at a time is sent only through a specific IAB base station to a UE under the base station or a next-level IAB base station. Therefore, when transmitting the MBS data, a donor (donor) base station in the IAB communication architecture needs to send a plurality of pieces of same data to a plurality of next-level IAB base stations respectively, and receive a plurality of pieces of uplink user plane feedback data returned by the plurality of next-level IAB base stations. Therefore, how to improve flexibility of data transmission in the IAB communication architecture is of research significance.

### SUMMARY

Embodiments of this application provide a communication method, apparatus, and system, to improve flexibility of data transmission in an IAB communication architecture.

According to a first aspect, a first communication method is provided. The method may be applied to a communication system, and may be specifically performed by a plurality of network nodes included in the communication system, or another network device including a function of the network node, or a chip system (or a chip) or another functional module, where the chip system or the functional module can implement the function of the network node, and the chip system or the functional module is, for example, deployed in the network node. The method includes: A first network node receives a first message from a second network node, where the first message includes first address information; the first network node sends a second message to a third network node, where the second message includes the first address information; and the third network node sends a third message to the second network node based on the first address information, where the third message includes a receiving status of downlink data, and the downlink data is broadcast data or multicast data from the first network node; and the second network node is a child node of the first network node, and the third network node is a child node of the second network node. Optionally, the multicast data may be, for example, multicast data.

In the method, the first network node may obtain an uplink user plane address of each network node through a control plane, and then send the uplink user plane address of the network node to a child network node of the network node. In this way, the child network node may perform uplink feedback to the parent network node based on the uplink user plane address through a user plane. For example, the first network node may include a donor network node, the second network node is a child node of the donor network node and is also a parent network node of the third network node, and the third network node may also be referred to as a child network node. According to the foregoing method, when feeding back whether downlink data is received, the child network node directly feeds back to the parent network node of the child network node, and does not need to perform uplink feedback to the donor network node in the communication system. Therefore, processing pressure of the donor network node can be reduced, and flexibility of data transmission in the communication system can be improved.

In a possible design, the method further includes: The second network node receives N fourth messages from N child nodes, where the fourth message includes a receiving status of the downlink data, the N child nodes include the third network node, the N fourth messages include the third message, the receiving status is that the downlink data is successfully received, and N is a positive integer; the second network node receives Q fifth messages from Q first terminal devices, where the fifth message includes a receiving status of the downlink data, the receiving status is that the downlink data is successfully received, the first terminal device is a terminal device connected to the second network node, and Q is a positive integer; and the second network node deletes a first data packet, where the first data packet includes data packets corresponding to the N child nodes and the Q first terminal devices, and the first data packet includes the downlink data.

In this design, a network node in the communication system other than the donor network node may also have a traffic control function, and may manage a connected child network node, so that the donor network node does not need to manage an indirectly connected child network node, thereby reducing management pressure of the donor network node and improving flexibility of data transmission in the communication system.

In a possible design, the method includes: The second network node sends a sixth message to the first network node, where the sixth message includes a receiving status of the downlink data, and the receiving status is that the downlink data is successfully received.

In this design, the donor network node performs traffic control on a directly connected child network node, that is, determines that the directly connected child network node successfully receives the downlink data; and does not need to manage a receiving status of the downlink data by the indirectly connected child network node (for example, the child node of the second network node). Therefore, management pressure of the donor network node can be reduced, and flexibility of data transmission in the communication system can be improved.

For example, in this design, because the second network node receives the third message from the third network node, or the second network node receives the N fourth messages from the N child nodes and receives the Q fifth messages from the Q first terminal devices, the second network node may determine that the child network node and the first terminal device successfully receive the downlink data. Therefore, the receiving status of the downlink data by the second network node needs to be fed back to the donor network node in an uplink manner.

In a possible design, the method further includes: The first network node receives M seventh messages from M child nodes, where the seventh message includes a receiving status of the downlink data, the receiving status is that the downlink data is successfully received, the M child nodes include the second network node, and M is a positive integer; the first network node receives P eighth messages from P second terminal devices, where the eighth message includes a receiving status of the downlink data, the receiving status is that the downlink data is successfully received, the second terminal device is a terminal device connected to the first network node, and P is a positive integer; and the first network node deletes a second data packet, where the second data packet includes data packets corresponding to the M child nodes and the P second terminal devices, and the second data packet includes the downlink data.

In this design, after determining that the directly connected child network node and the directly connected terminal device successfully receive the downlink data, the donor network node may manage a downlink data packet. In this way, the donor network node does not need to care about a receiving status of the downlink data by the indirectly connected child network node. It may be understood that, after determining that the child network node and the terminal device of the child network node of the donor network node successfully receive the downlink data, the child network node of the donor network node may perform, to the donor network node, uplink feedback indicating that the downlink data is successfully received.

In a possible design, before the third network node sends the third message to the second network node based on the first address information, the method further includes: The second network node receives the downlink data from the first network node; the second network node caches the downlink data; and the second network node sends the downlink data to the third network node.

In this design, in a downlink data transmission scenario, the donor network node may also send the downlink data to the directly connected child network node, and the child network node may send the downlink data to a next-level child network node directly connected to the child network node, thereby reducing transmission pressure of sending the downlink data by the donor network node, and improving flexibility of data transmission in the communication system.

In a possible design, the first network node is an IAB-donor node, the second network node is a first IAB node, and the third network node is a second IAB node. The method provided in this application may be applied to an IAB communication architecture, to reduce processing pressure of the IAB-donor node, and improve flexibility of data transmission in an IAB communication system.

In a possible design, the first network node includes a CU of the IAB-donor node. In this design, the first network node may include a function of the CU in the IAB-donor node, and may be integrated into an IAB-donor base station.

In a possible design, the first message is a broadcast session establishment response message. In this design, a network node at each level in the communication system (including network nodes that are indirectly connected to the donor network node through another network node, for example, a child network node at a level like a second level or a third level of the donor node) may report an uplink user plane address to the donor network node in the communication system through a broadcast session establishment procedure, so that the donor network node can obtain the uplink user plane address of the network node at each level, and further notify the uplink user plane address to a child node of the network node, to establish a user plane tunnel between two network nodes. In this way, some network nodes in the communication system may not need to establish a user plane tunnel with the donor network node, thereby reducing processing pressure of the donor network node.

In a possible design, the second message is a broadcast session establishment request message; or the second message is a multicast session establishment response message. In another possible design, the second message may alternatively be another message; or the second message is a separate message. In this design, the first network node may bear the uplink user plane address in a broadcast session-related message, a multicast session-related message, another message, or a separate message, so that the network node at each level in the communication system can obtain an uplink user plane address of a parent node of the network node.

According to a second aspect, a second communication method is provided. The method is performed by a first network node, or is performed by another device (for example, a first network device) including a function of the first network node, or is performed by a chip system (or a chip) or another functional module, where the chip system or the functional module can implement the function of the first network node, and the chip system or the functional module is, for example, deployed in the first network node. The first network node is, for example, an access network device, and may be referred to as a second access network device. For example, an implementation of the second access network device is a base station. The method includes: The first network node receives a first message from a second network node, where the first message includes first address information; and the first network node sends a second message to a third network node, where the second message includes the first address information, the second network node is a child node of the first network node, and the third network node is a child node of the second network node.

In a possible design, the method further includes: The first network node receives a sixth message from the second network node, where the sixth message includes a receiving status of downlink data, and the receiving status is that the downlink data is successfully received.

In a possible design, the method further includes: The first network node receives M seventh messages from M child nodes, where the seventh message includes a receiving status of the downlink data, the receiving status is that the downlink data is successfully received, the M child nodes include the second network node, and M is a positive integer; the first network node receives P eighth messages from P second terminal devices, where the eighth message includes a receiving status of the downlink data, the receiving status is that the downlink data is successfully received, the second terminal device is a terminal device connected to the first network node, and P is a positive integer; and the first network node deletes a second data packet, where the second data packet includes data packets corresponding to the M child nodes and the P second terminal devices, and the second data packet includes the downlink data.

In a possible design, the method further includes: The first network node sends the downlink data to the second network node.

In a possible design, the first network node is an IAB-donor node, the second network node is a first IAB node, and the third network node is a second IAB node.

In a possible design, the first network node includes a CU of the IAB-donor node.

In a possible design, the first message is a broadcast session establishment response message.

In a possible design, the second message is a broadcast session establishment request message; or the second message is a multicast session establishment response message.

For beneficial effects of the various possible designs in the second aspect, refer to content of the various possible designs in the first aspect. Details are not described herein again.

According to a third aspect, a third communication method is provided. The method is performed by a second network node, or is performed by another device (for example, a second network device) including a function of the second network node, or is performed by a chip system (or a chip) or another functional module, where the chip system or the functional module can implement the function of the second network node, and the chip system or the functional module is, for example, deployed in the second network node. The second network node is, for example, an access network device, and may be referred to as a second access network device. For example, an implementation of the second access network device is a base station. The method includes: The second network node sends a first message to a first network node, where the first message includes first address information, and the second network node is a child node of the first network node.

In a possible design, the second network node receives N fourth messages from N child nodes, where the fourth message includes a receiving status of downlink data, the N child nodes include a third network node, the N fourth messages include a third message, the receiving status is that the downlink data is successfully received, and N is a positive integer; the second network node receives Q fifth messages from Q first terminal devices, where the fifth message includes a receiving status of the downlink data, the receiving status is that the downlink data is successfully received, the first terminal device is a terminal device connected to the second network node, and Q is a positive integer; and the second network node deletes a first data packet, where the first data packet includes data packets corresponding to the N child nodes and the Q first terminal devices, and the first data packet includes the downlink data.

In a possible design, the second network node sends a sixth message to the first network node, where the sixth message includes a receiving status of the downlink data, and the receiving status is that the downlink data is successfully received.

In a possible design, before the second network node receives the third message from a third network device, the method further includes: The second network node receives the downlink data from the first network node; the second network node caches the downlink data; and the second network node sends the downlink data to the third network node.

In a possible design, the first network node is an IAB-donor node, the second network node is a first IAB node, and the third network node is a second IAB node.

In a possible design, the first network node includes a CU of the IAB-donor node.

In a possible design, the first message is a broadcast session establishment response message.

In a possible design, the second message is a broadcast session establishment request message; or the second message is a multicast session establishment response message.

For beneficial effects of the various possible designs in the third aspect, refer to content of the various possible designs in the first aspect. Details are not described herein again.

According to a fourth aspect, a fourth communication method is provided. The method is performed by a third network node, or is performed by another device (for example, a third network device) including a function of the third network node, or is performed by a chip system (or a chip) or another functional module, where the chip system or the functional module can implement the function of the third network node, and the chip system or the functional module is, for example, deployed in the third network node. The third network node is, for example, an access network device, and may be referred to as a second access network device. For example, an implementation of the second access network device is a base station. The method includes: The third network node receives a second message from a first network node, where the second message includes first address information; and the third network node sends a third message to a second network node based on the first address information, where the third message includes a receiving status of downlink data, and the downlink data is broadcast data or multicast data from the first network node; and the second network node is a child node of the first network node, and the third network node is a child node of the second network node.

In a possible design, the third network node receives the downlink data from the second network node.

In a possible design, the first network node is an IAB-donor node, the second network node is a first IAB node, and the third network node is a second IAB node.

In a possible design, the first network node includes a CU of the IAB-donor node.

In a possible design, the first message is a broadcast session establishment response message.

In a possible design, the second message is a broadcast session establishment request message; or the second message is a multicast session establishment response message.

For beneficial effects of the various possible designs in the fourth aspect, refer to content of the various possible designs in the first aspect. Details are not described herein again.

According to a fifth aspect, a communication system is provided. The communication system includes a first network node, a second network node, and a third network node. The first network node is configured to receive a first message from the second network node, where the first message includes first address information; the first network node is configured to send a second message to the third network node, where the second message includes the first address information; and the third network node is configured to send a third message to the second network node based on the first address information, where the third message includes a receiving status of downlink data, and the downlink data is broadcast data or multicast data from the first network node; and the second network node is a child node of the first network node, and the third network node is a child node of the second network node. Optionally, the multicast data may be, for example, multicast data.

In a possible design, the second network node is further configured to: receive N fourth messages from N child nodes, where the fourth message includes a receiving status of the downlink data, the N child nodes include the third network node, the N fourth messages include the third message, the receiving status is that the downlink data is successfully received, and N is a positive integer; receive Q fifth messages from Q first terminal devices, where the fifth message includes a receiving status of the downlink data, the receiving status is that the downlink data is successfully received, the first terminal device is a terminal device connected to the second network node, and Q is a positive integer; and delete a first data packet, where the first data packet includes data packets corresponding to the N child nodes and the Q first terminal devices, and the first data packet includes the downlink data.

In a possible design, the second network node is further configured to send a sixth message to the first network node, where the sixth message includes a receiving status of the downlink data, and the receiving status is that the downlink data is successfully received.

In a possible design, the first network node is further configured to: receive M seventh messages from M child nodes, where the seventh message includes a receiving status of the downlink data, the receiving status is that the downlink data is successfully received, the M child nodes include the second network node, and M is a positive integer; receive P eighth messages from P second terminal devices, where the eighth message includes a receiving status of the downlink data, the receiving status is that the downlink data is successfully received, the second terminal device is a terminal device connected to the first network node, and P is a positive integer; and delete a second data packet, where the second data packet includes data packets corresponding to the M child nodes and the P second terminal devices, and the second data packet includes the downlink data.

In a possible design, before the third network node sends the third message to the second network node based on the first address information, the second network node is further configured to: receive the downlink data from the first network node; cache the downlink data; and send the downlink data to the third network node.

In a possible design, the first network node is an IAB-donor node, the second network node is a first IAB node, and the third network node is a second IAB node.

In a possible design, the first network node includes a CU of the IAB-donor node.

In a possible design, the first message is a broadcast session establishment response message.

In a possible design, the second message is a broadcast session establishment request message; or the second message is a multicast session establishment response message. In another possible design, the second message may alternatively be another message; or the second message is a separate message.

For beneficial effects of the various possible designs in the fifth aspect, refer to content of the various possible designs in the first aspect. Details are not described herein again.

According to a sixth aspect, a communication apparatus is provided. The communication apparatus may be the first network node (or the first network device in which the first network node is located) in any design of the second aspect. The communication apparatus has a function of the first network node (or the first network device in which the first network node is located). The communication apparatus is, for example, the first network node (or the first network device in which the first network node is located), or a large device including the first network node (or the first network device in which the first network node is located), or a functional module in the first network node (or the first network device in which the first network node is located), for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term of these functional modules.

In an optional implementation, the communication apparatus further includes a storage unit (sometimes also referred to as a storage module); and the processing unit is configured to be coupled to the storage unit and execute a program or instructions in the storage unit, to enable the communication apparatus to perform the function of the first network node (or the first network device in which the first network node is located) in any design of the second aspect.

According to a seventh aspect, a communication apparatus is provided. The communication apparatus may be the second network node (or the second network device in which the second network node is located) in any design of the third aspect. The communication apparatus has a function of the second network node (or the second network device in which the second network node is located). The communication apparatus is, for example, the second network node (or the second network device in which the second network node is located), or a large device including the second network node (or the second network device in which the second network node is located), or a functional module in the second network node (or the second network device in which the second network node is located), for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions of the sixth aspect.

In an optional implementation, the communication apparatus further includes a storage unit (sometimes also referred to as a storage module); and the processing unit is configured to be coupled to the storage unit and execute a program or instructions in the storage unit, to enable the communication apparatus to perform the function of the second network node (or the second network device in which the second network node is located) in any design of the third aspect.

According to an eighth aspect, a communication apparatus is provided. The communication apparatus may be the third network node (or the third network device in which the third network node is located) in any design of the fourth aspect. The communication apparatus has a function of the third network node (or the third network device in which the third network node is located). The communication apparatus is, for example, the third network node (or the third network device in which the third network node is located), or a large device including the third network node (or the third network device in which the third network node is located), or a functional module in the third network node (or the third network device in which the third network node is located), for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions of the sixth aspect.

In an optional implementation, the communication apparatus further includes a storage unit (sometimes also referred to as a storage module); and the processing unit is configured to be coupled to the storage unit and execute a program or instructions in the storage unit, to enable the communication apparatus to perform the function of the third network node (or the third network device in which the third network node is located) in any design of the fourth aspect.

According to a ninth aspect, a communication apparatus is provided. The communication apparatus may be a first network node (or a first network device in which the first network node is located), or a chip or a chip system used in a first network node (or a first network device in which the first network node is located). The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the first network node (or the first network device in which the first network node is located) in the foregoing aspects.

According to a tenth aspect, a communication apparatus is provided. The communication apparatus may be a second network node (or a second network device in which the second network node is located), or a chip or a chip system used in a second network node (or a second network device in which the second network node is located). The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the second network node (or the second network device in which the second network node is located) in the foregoing aspects.

According to an eleventh aspect, a communication apparatus is provided. The communication apparatus may be a third network node (or a third network device in which the third network node is located), or a chip or a chip system used in a third network node (or a third network device in which the third network node is located). The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the third network node (or the third network device in which the third network node is located) in the foregoing aspects.

According to a twelfth aspect, a computer-readable storage medium is provided. The computer-readable storage medium is configured to store a computer program or instructions. When the computer program or the instructions are run, the method performed by the first network node, the second network node, or the third network node in the foregoing aspects is implemented.

According to a thirteenth aspect, a computer program product including instructions is provided. When the computer program product is run on a computer, the method according to the foregoing aspects is implemented.

According to a fourteenth aspect, a chip system is provided, including a processor and an interface. The processor is configured to invoke instructions from the interface and run the instructions, to cause the chip system to implement the method in the foregoing aspects.

### BRIEF DESCRIPTION OF DRAWINGS

FIG. 1 is a diagram of a structure of a CU-DU;
FIG. 2 is a diagram of a structure of an MBS;
FIG. 3 is a diagram of an IAB communication architecture;
FIG. 4 is a diagram of a user plane protocol stack of an IAB communication architecture;
FIG. 5 is a diagram of a topology of an IAB communication architecture according to an embodiment of this application;
FIG. 6 is a diagram of another topology of an IAB communication architecture according to an embodiment of this application;
FIG. 7 is a diagram of a user plane protocol stack of an IAB communication architecture according to an embodiment of this application;
FIG. 8 is a schematic flowchart of sending uplink user plane feedback data according to an embodiment of this application;
FIG. 9 is a first flowchart of a communication method according to an embodiment of this application;
FIG. 10 is a second flowchart of a communication method according to an embodiment of this application;
FIG. 11 is a third flowchart of a communication method according to an embodiment of this application;
FIG. 12 is a fourth flowchart of a communication method according to an embodiment of this application;
FIG. 13 is a fifth flowchart of a communication method according to an embodiment of this application;
FIG. 14 is a sixth flowchart of a communication method according to an embodiment of this application;
FIG. 15 is a diagram of an apparatus according to an embodiment of this application; and
FIG. 16 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects.

The following describes some terms or concepts in embodiments of this application, to facilitate understanding of a person skilled in the art.
(1) In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in the following scenarios: a sensing scenario, cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), smart grid (smart grid), smart furniture, smart office, smart wearable, smart transportation, smart city (smart city), an uncrewed aerial vehicle, a robot, and the like. For example, the terminal device may perform wireless communication with a base station. The base station may be, for example, an IAB-donor node, an IAB node directly connected to the IAB-donor node, or an IAB node indirectly connected to the IAB-donor node in embodiments of this application.

The terminal device may be sometimes referred to as a user equipment (user equipment, UE), a terminal, an access station, a UE station, a remote station, a wireless communication device, a user apparatus, or the like.

In embodiments of this application, a communication apparatus configured to implement a function of the terminal device may be a terminal device, or may be an apparatus, for example, a chip system, that can support the terminal device in implementing the function. The apparatus may be mounted in the terminal device. In the technical solutions provided in embodiments of this application, the technical solutions provided in embodiments of this application are described by using an example in which the apparatus configured to implement the function of the terminal device is a terminal device.

(2) A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a subsequently evolved base station in the 3rd generation partnership project (3rd generation partnership project, 3GPP), an access node in a wireless fidelity (wireless fidelity, Wi-Fi) system, a wireless relay node, a wireless backhaul node (for example, an IAB node), and the like. The base station may be a macro base station, a micro base station, a pico base station, a small cell, a relay station, or the like. A plurality of base stations may support networks using a same access technology, or may support networks using different access technologies. The base station may include one or more co-site or non-co-site transmission reception points.

Alternatively, the access network device may be a radio controller, a central unit (central unit, CU), and/or a distributed unit (distributed unit, DU) in a cloud radio access network (cloud radio access network, CRAN) scenario. A CU-DU split base station architecture is a new base station architecture introduced in 5G. In a 4th generation (4th generation, 4G) base station architecture, each base station is independently deployed and is separately connected to a 4G core network. However, in the 5G architecture, DUs of different base stations are deployed independently, but CUs of different base stations are deployed in a centralized manner.

From a perspective of a physical module structure, a 4G base station is internally divided into several modules such as a baseband unit (baseband unit, BBU), a remote radio unit (remote radio unit, RRU), and an antenna. Each base station has a set of BBUs and is directly connected to the core network through the BBUs. In the 5G CU-DU split architecture, an original RRU and an original antenna are combined into an active antenna unit (active antenna unit, AAU), and a BBU is split into a DU and a CU. Each base station has a set of DUs, and a plurality of sites share a same CU for centralized management.

From a perspective of a protocol stack structure, in a 5G base station, a physical bottom layer of a BBU of a 4G base station is moved down to an AAU for processing, a physical upper layer, a medium access control (medium access control, MAC) layer, and a radio resource control (radio resource control, RLC) layer that have a high requirement on real-time performance are placed in a DU for processing, and a packet data convergence protocol (packet data convergence protocol, PDCP) layer, a service data adaptation protocol (service data adaptation protocol, SDAP) layer, and a radio resource control (radio resource control, RRC) layer that do not have a high requirement on real-time performance are placed in a CU for processing.

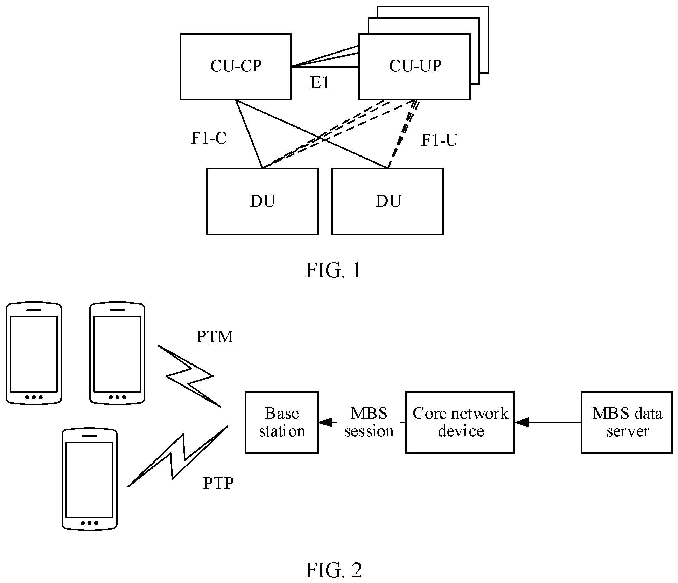

For example, FIG. 1 is a diagram of a structure of a CU-DU. In the CU-DU architecture, an interface between a CU and a DU is referred to as an F1 interface. As shown in FIG. 1, the CU may be further divided into a CU-control plane (control plane, CP) and a CU-user plane (user plane, UP). An interface between the CU-CP and the CU-UP is referred to as an E1 interface. One base station generally has only one CU-CP, a plurality of CU-UPs, and a plurality of DUs. One DU can be connected to only one CU-CP, and one CU-UP can also be connected to only one CU-CP. An interface between the CU-CP and the DU is referred to as an F1-C, and an interface between the CU-UP and the DU is referred to as an F1-U. As shown in FIG. 1, there may be a plurality of F1-Us between one DU and a plurality of CU-UPs. The F1-U is usually used for data transmission, and may also be referred to as an F1-U tunnel.

The access network device may alternatively be a server or the like. For example, a network device in a V2X technology may be a road side unit (road side unit, RSU). The following provides descriptions by using an example in which the access network device is a base station. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement a function of a core network in systems of different access technologies may be different. This is not limited in embodiments this application. A 5G system is used as an example. The core network device includes an access and mobility management function (access and mobility management function, AMF), a session management function (session management function, SMF), a policy control function (policy control function, PCF), a user plane function (user plane function, UPF), and the like.

In embodiments of this application, a communication apparatus configured to implement a function of the network device may be a network device, or may be an apparatus, for example, a chip system, that can support the network device in implementing the function. The apparatus may be mounted in the network device. In the technical solutions provided in embodiments of this application, the technical solutions provided in embodiments of this application are described by using an example in which the apparatus configured to implement the function of the network device is a network device.

### (3) Multicast broadcast service (multicast broadcast service, MBS)

The MBS is a service oriented to a plurality of UEs, for example, a live streaming service, a public security service, and a batch software update service.

FIG. 2 is a diagram of a structure of an MBS. As shown in FIG. 2, MBS data is from an MBS data server. First, the MBS data server sends the MBS data to a core network device. Then, the core network device sends the MBS data to a base station. Finally, the base station sends the MBS data to at least one UE that receives the MBS data. When being sent from the core network device to the base station, the MBS data is transmitted through a common transmission channel (that is, an MBS session), and each MBS session may include at least one MBS QoS flow. When being sent from the base station to the UE, a data packet is transmitted through an MBS radio bearer. For one MBS radio bearer, there are two transmission modes: a PTM transmission mode and a PTP transmission mode.

### (4) IAB communication architecture

In the CU-DU architecture, an ideal backhaul technology is to connect a CU and a DU by using an optical fiber. However, in actual deployment of 5G wireless communication, due to a deployment environment, deployment costs, or the like, some connections between the DU and the CU cannot be implemented by using the optical fiber. Instead, a wireless backhaul technology, that is, an IAB technology, may be used for relay backhaul.

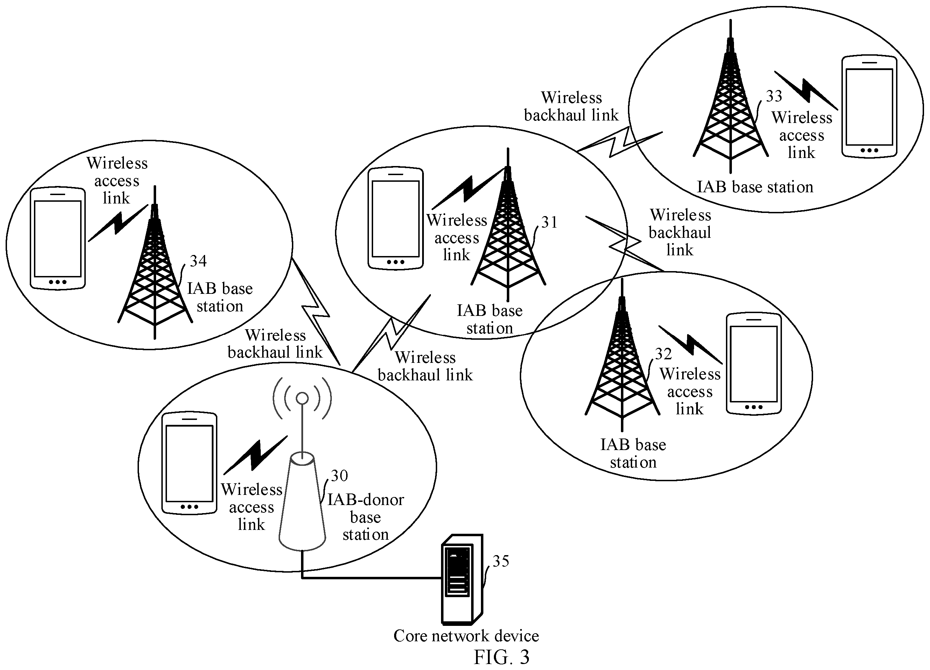

FIG. 3 is a diagram of an IAB communication architecture. It can be learned from FIG. 3 that an IAB-donor base station 30 is connected to a core network device 35 in a wired manner. Another IAB base station (for example, an IAB base station 31, an IAB base station 32, an IAB base station 33, and an IAB base station 34 in FIG. 3) other than the IAB-donor base station 30 is not connected to the core network device 35 in a wired manner, but is connected to the IAB-donor base station 30 through a wireless backhaul link, so that a UE served by the another IAB base station is connected to the core network device 35.

Specifically, the IAB base station provides a wireless access link (access link) and a wireless backhaul (backhaul) link. The wireless access link is a communication link between the UE and an IAB base station (including the IAB-donor base station and the another IAB base station). The wireless backhaul link is a communication link between other IAB base stations or between the another IAB base station and the IAB-donor base station, and is used for data backhaul. Therefore, the IAB base station does not need a wired transmission network like an optical fiber for data backhaul.

In addition, it can be further learned from FIG. 3 that there is a multi-hop case in the IAB communication architecture. To be specific, the IAB base station 32 and the IAB base station 33 are not directly connected to the IAB-donor base station 30, but are connected to the IAB-donor base station 30 via the IAB base station 31.

Considering that a data transmission scenario includes a downlink data transmission scenario and an uplink data transmission scenario, the following separately describes the downlink data transmission scenario and the uplink data transmission scenario in the IAB communication architecture.

**(4-1) Downlink data is transmitted based on the IAB communication architecture. The downlink data may be, for example, MBS data.**

Compared with a common base station, a new protocol layer, that is, a backhaul adaptation protocol (backhaul adaption protocol, BAP) layer, is added to the IAB base station, and a main function of the protocol layer is a routing function, that is, after receiving data, determining a next destination of the data, which may also be understood as: after delivering the data to a higher layer of the IAB base station for processing, sending the data to a UE connected to the IAB base station; or forwarding the data to a next-hop node, that is, forwarding the data to a next IAB base station. A basis for determining a destination of the data is: a BAP address and a path identifier (PATH ID) included in a header of a data packet, where the BAP address is used to identify a destination address of the data in the IAB communication architecture, the PATH ID is used to identify a transmission path of the data in a network, and the BAP address and the PATH ID may also be collectively referred to as a routing address (routing ID). Specifically, downlink data transmission is used as an example. When each IAB base station is established, the IAB-donor base station 30 allocates an address, that is, the BAP address, of the IAB base station to the IAB base station. In addition, in backhaul routing information, next-hop IAB base stations corresponding to different routing IDs are specified by using PATH IDs, and destination IAB base stations corresponding to different routing IDs are specified by using BAP addresses. Based on this, it may be understood that before the IAB-donor base station 30 sends the downlink data, the BAP address and the PATH ID are added to a BAP header at the BAP layer.

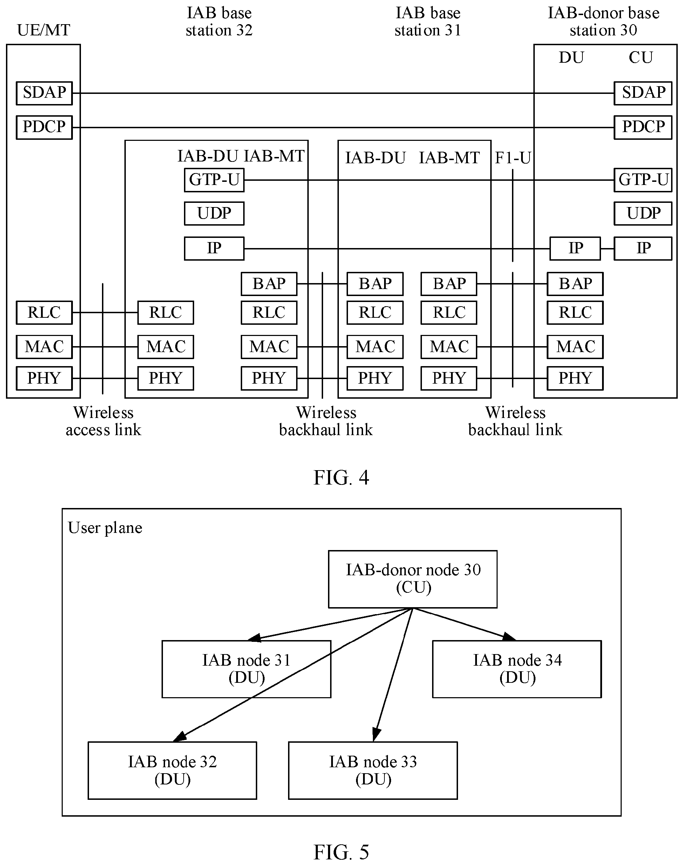

FIG. 4 is a diagram of a structure of a user plane protocol stack of an IAB communication architecture. The IAB-donor base station 30, the IAB base station 31, the IAB base station 32, and a UE connected to the IAB base station 32 are used as an example. After receiving the downlink data, the IAB base station 31 compares the BAP address in the header of the downlink data packet with a BAP address allocated to the IAB base station. In a possible scenario, if the BAP address in the header of the downlink data packet is the same as the BAP address of the IAB base station, it indicates that the downlink data is sent to the IAB base station. Therefore, the downlink data is delivered to an upper layer for processing, and then is sent to a UE connected to the IAB base station. In another possible scenario, if the BAP address in the header of the downlink data packet is different from the BAP address of the IAB base station, it indicates that the downlink data is not sent to the IAB base station, and the IAB base station sends the downlink data to a next-hop IAB base station (for example, the IAB base station 32 in FIG. 4) based on the BAP address and the PATH ID in the header of the downlink data packet. The rest is deduced by analogy.

As shown in FIG. 4, the IAB-donor base station 30 may implement a function of a CU, that is, connect to one or more IAB base stations, for example, the IAB base station 31. The IAB-donor base station 30 may further implement a function of a DU, that is, connect to one or more UEs. For ease of differentiation, in the following embodiments, a unit that implements the function of the CU in the IAB-donor base station 30 is referred to as an IAB-donor node 30, or referred to as an IAB-donor-CU.

The IAB base station 31 is used as an example. In the IAB communication architecture, another IAB base station other than the IAB-donor base station 30 may implement a function of an IAB-DU, and may provide wireless data backhaul for a downstream IAB base station (for example, the IAB base station 32 and the IAB base station 33) or a connected UE. The IAB base station 31 may further implement a function of an IAB-mobile terminated (mobile terminated, MT) service, and may be connected to an upstream IAB-donor-DU. For ease of differentiation, in the following embodiments, a unit that implements the function of the DU in the IAB base station is referred to as an IAB node, or referred to as an IAB-DU, for example, an IAB node 31, an IAB node 32, an IAB node 33, and an IAB node 34.

Based on the IAB communication architecture described above, in an existing IAB communication architecture and an existing data transmission processing method, only a unicast service is considered. To be specific, downlink data transmitted at a time is sent only through a specific IAB base station to a UE under the base station or a next-level IAB base station. FIG. 5 is a diagram of a topology of an IAB communication architecture according to an embodiment of this application. As shown in FIG. 5, child nodes connected to an IAB-donor node 30 include: an IAB node 31 and an IAB node 34; and child nodes connected to the IAB node 31 include: an IAB node 32 and an IAB node 33. Based on the structure of the user plane protocol stack described in FIG. 4, if downlink data is to be sent by the IAB-donor node 30 from the IAB-donor node 30 to the IAB node 32, a user plane tunnel needs to be separately established between the IAB-donor node 30 and the IAB node 32. To be specific, the IAB-donor node 30 separately sends data to the IAB node 32, and this part of data needs to pass through the IAB node 31. However, for the IAB node 31, a transparent transmission manner is used.

With reference to the MBS scenario described in FIG. 2, the IAB-donor node 30 separately sends four pieces of same downlink data to the IAB node 31, the IAB node 32, the IAB node 33, and the IAB node 34. As a result, the IAB-donor node 30 has great transmission pressure. Correspondingly, the IAB-donor node 30 may also need to receive uplink user plane data (for example, uplink user plane feedback data) from the IAB node 31, the IAB node 32, the IAB node 33, and the IAB node 34. Therefore, a data transmission manner in a current protocol is inflexible, and how to optimize a data transmission manner in a multi-layer communication system like an IAB communication architecture is of important research significance.

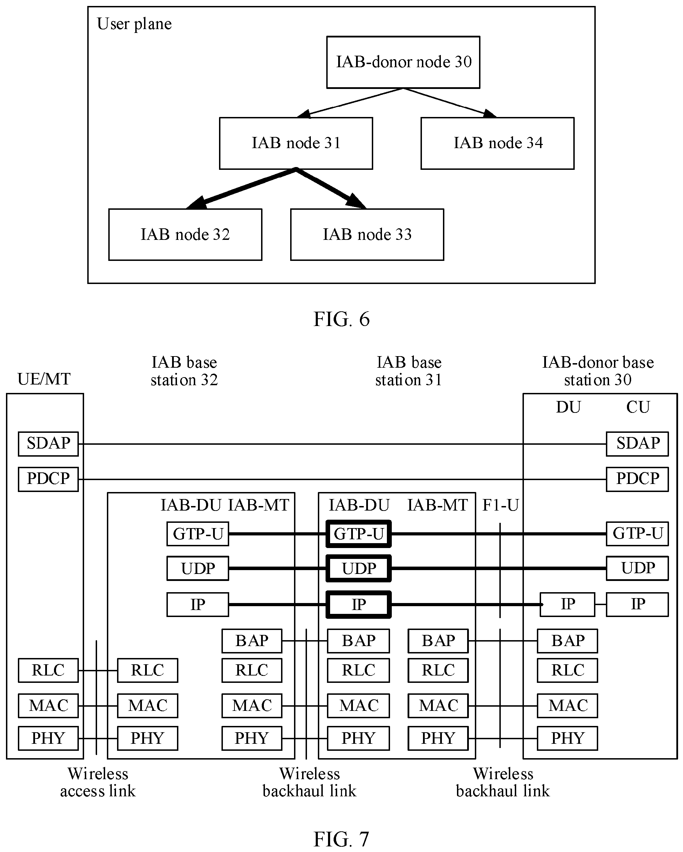

In the IAB communication architecture, the IAB node 32 and the IAB node 33 are child nodes of the IAB node 31, and data received by the IAB node 32 and the IAB node 33 needs to pass through the IAB node 31. Therefore, to reduce transmission pressure of the IAB-donor node 30, the IAB node 31 may be used to send an MBS. In this way, the IAB-donor node 30 only needs to establish a user plane tunnel with the IAB node 31, and in a scenario of sending downlink data to the IAB node 31 to the IAB node 33, only needs to send one piece of data to the IAB node 31. FIG. 6 is a diagram of another topology of an IAB communication architecture according to an embodiment of this application. As shown in FIG. 6, an IAB-donor node 30 establishes a user plane tunnel with an IAB node 31, the IAB-donor node 30 establishes a user plane tunnel with an IAB node 34, the IAB node 31 establishes a user plane tunnel with an IAB node 32, and the IAB node 31 establishes a user plane tunnel with an IAB node 33. FIG. 7 is a diagram of another structure of a user plane protocol stack of an IAB communication architecture. The IAB-donor node 30 may send downlink data to the IAB node 31 through the user plane tunnel between the IAB-donor node 30 and the IAB node 31. The IAB node 31 may cache the downlink data. The IAB node 31 may send the downlink data to the IAB node 32 through the user plane tunnel between the IAB node 31 and the IAB node 32. Although not shown in FIG. 7, the IAB node 31 may also send the downlink data to the IAB node 33 through the user plane tunnel between the IAB node 31 and the IAB node 33. It may be understood that, based on the user plane protocol stack shown in FIG. 7, in this case, the downlink data received by the IAB node 32 is from the IAB node 31.

**(4-2) Uplink data is transmitted based on the IAB communication architecture. The uplink data may be, for example, uplink feedback data for MBS data, where traffic control may be implemented through the uplink feedback data.**

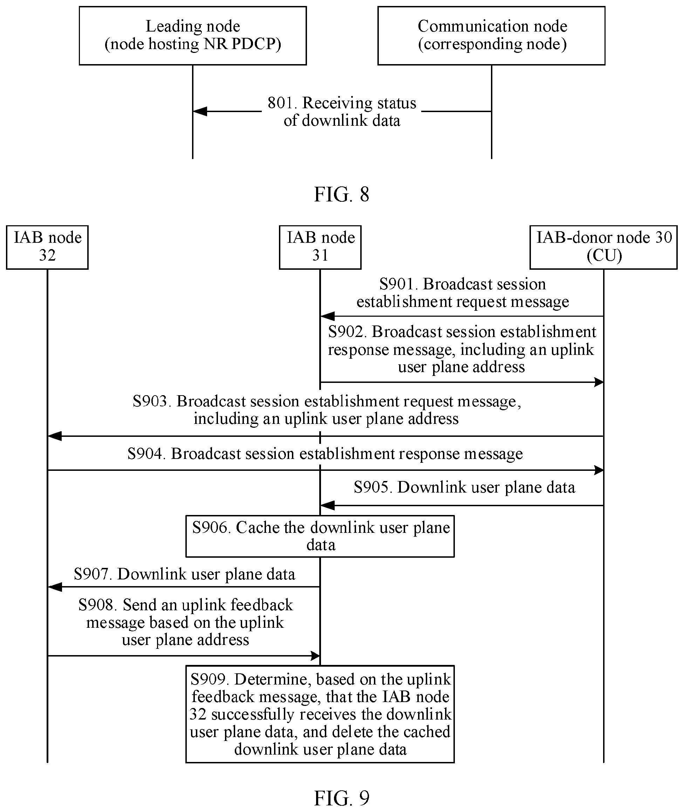

Based on the content described in FIG. 4 and FIG. 5, the IAB-donor node 30 separately establishes a user plane tunnel with each IAB node. Therefore, corresponding to the downlink data, each IAB node sends uplink feedback data through the user plane tunnel between the IAB node and the IAB-donor node 30. FIG. 8 is a schematic flowchart of sending uplink feedback data according to an embodiment of this application. FIG. 8 may include the following steps:

Step 801. A leading node (English name: node hosting NR PDCP) receives a receiving status of downlink data from a communication node (English name: corresponding node). For example, the receiving status of the downlink data may be transferred through a DL DATA DELIVERY STATUS frame.

With reference to the topology structure shown in FIG. 5, the node hosting NR PDCP corresponds to the IAB-donor node 30, that is, the CU in the IAB communication architecture; and the corresponding node corresponds to each IAB node, for example, the IAB node 31 to the IAB node 34, that is, the DU in the IAB communication architecture. It may be understood that, when the node hosting NR PDCP receives DL DATA DELIVERY STATUS frames from all corresponding nodes, and the DL DATA DELIVERY STATUS frames indicate that the downlink data is successfully received, the node hosting NR PDCP may delete the cached downlink data. When a DL DATA DELIVERY STATUS frame indicates that the downlink data fails to be received, the node hosting NR PDCP may retransmit the downlink data to a corresponding node that fails to receive the downlink data. In this way, traffic control can be implemented through the node hosting NR PDCP.

Based on a current IAB communication architecture, only the IAB-donor node 30 has a traffic control function of the node hosting NR PDCP, and another IAB node other than the IAB-donor node 30 has only a function of the corresponding node.

Based on the content described in FIG. 6 and FIG. 7, in a scenario in which a user plane tunnel is established between IAB nodes, the user plane tunnel may be applied to not only the downlink data transmission scenario described in FIG. 6 and FIG. 7, but also an uplink data transmission scenario. However, because the IAB node receives MBS data from the IAB-donor node 30 in a broadcast or multicast manner, the IAB node can obtain only an address of the IAB-donor node 30. In the scenario in which a user plane tunnel is established between IAB nodes, the IAB node also directly feeds back uplink data to the IAB-donor node 30. For example, the IAB node 32 feeds back uplink data to the IAB-donor node 30 but cannot feed back the uplink data to the IAB node 31. Therefore, how to optimize a feedback manner of the uplink data in the scenario in which a user plane tunnel is established between IAB nodes is worth studying.

In view of this, an embodiment of this application provides a communication method. In the method, in a process of establishing a broadcast or multicast session with each IAB node on a control plane, the IAB-donor node 30 receives an uplink user plane address reported by the IAB node. In addition, the IAB-donor node 30 sends the uplink user plane address of the IAB node to a child node of the IAB node, for example, sends an uplink user plane address of the IAB node 31 to the IAB node 32 and the IAB node 33. In this way, the IAB node may obtain an uplink user plane address of a parent node, to send uplink user plane data to the parent node, for example, uplink user plane feedback data. The uplink user plane feedback data may be used to feed back a receiving status of downlink data. In the IAB communication architecture, an IAB node that may be used as a parent node may be not only the IAB-donor node 30, but also another IAB node, for example, the IAB node 31. Therefore, processing pressure of the IAB-donor node 30 on the uplink user plane feedback data can be reduced.

Further, the IAB-donor node 30 needs to manage only a directly connected IAB node, and an IAB node that is not directly connected may be managed by a parent node of the IAB node (for example, the IAB node 32 is managed by the IAB node 31, and the IAB node 31 is a parent node of the IAB node 32), so that decentralized management can be implemented, and a requirement on processing performance of the IAB-donor node 30 can be reduced.

The communication method provided in this embodiment of this application may be applied to a scenario in which downlink data is transmitted in a broadcast or multicast manner. The multicast manner may include a multicast manner. In the following embodiments, a broadcast manner is used as an example for description. For an implementation of the multicast manner, refer to an implementation of the broadcast manner. In addition, the communication method provided in this embodiment of this application is specifically applicable to a scenario in which uplink feedback needs to be performed on a receiving status of downlink data.

**An embodiment of this application provides a communication method.** **FIG. 9** **is a flowchart of the method.** The procedure described in FIG. 9 is described by using an IAB-donor node 30, an IAB node 31, and an IAB node 32 as an example, where the IAB node 31 is a child node of the IAB-donor node 30, and the IAB node 32 is a child node of the IAB node 31. It may be understood that, when another IAB node is used as a parent node, refer to content of the IAB node 31 described in this embodiment of this application. For example, the IAB node 32 may also be used as a parent node to connect to a downstream IAB node. When being used as a child node of another IAB node (which may also be understood as a node other than the IAB-donor node 30), refer to content of the IAB node 32 described in this embodiment of this application.

**S901.** The IAB-donor node 30 sends a broadcast session establishment request message to the IAB node 31. Correspondingly, the IAB node 31 receives the broadcast session establishment request message from the IAB-donor node 30.

For example, a broadcast session may be established between the IAB-donor node 30 and the IAB node 31 according to a broadcast session establishment procedure in the existing TS 38.401 protocol. Details are not described in this application. In addition, establishment of a broadcast session between the IAB-donor node 30 and each IAB node described in the following embodiments may also be performed according to the broadcast session establishment procedure in the existing TS 38.401 protocol, which is not described in the following embodiments.

**S902.** The IAB node 31 sends a broadcast session establishment response message to the IAB-donor node 30, where the broadcast session establishment response message includes an uplink user plane address. Correspondingly, the IAB-donor node 30 receives the broadcast session establishment response message from the IAB node 31.

For example, the uplink user plane address is used to receive uplink user plane data. For example, the user plane data may be feedback data, and the feedback data may be used to feed back a receiving status of downlink user plane data. For example, the uplink user plane address may be represented by a new uplink transport network layer (new uplink transport network layer, new UL TNL) address. The new UL TNL address is used to receive uplink user plane feedback data from the child node, and for example, used by the IAB node 31 to receive uplink user plane feedback data from the IAB node 32.

Optionally, the broadcast session establishment response message may further carry a downlink receive address (English name: F1-U TNL DU) of the IAB node 31, and the F1-U TNL DU may be used to receive downlink user plane data of the parent node. For example, the IAB-donor node 30 sends downlink user plane data to the IAB node 31 based on the F1-U TNL DU; and correspondingly, the IAB node 31 receives the downlink user plane data of the IAB-donor node 30.

In addition, it should be noted that, in a scenario in which the multicast manner is multicast, since the IAB node 31 sends a multicast session establishment request message to the IAB-donor node 30, the uplink user plane address of the IAB node 31 may also be borne in the multicast session establishment request message.

**S903.** The IAB-donor node 30 sends a broadcast session establishment request message to the IAB node 32, where the broadcast session establishment request message includes the new UL TNL address of the IAB node 31. Correspondingly, the IAB node 32 receives the broadcast session establishment request message from the IAB-donor node 30.

In this way, the IAB-donor node 30 may bear the new UL TNL address of the IAB node 31 through the broadcast session establishment request message sent to the IAB node 32.

Optionally, the broadcast session establishment request message may further include an uplink user plane address of the IAB-donor node 30. In this way, the IAB node 32 may not only obtain the uplink user plane address of the parent node, but also obtain the uplink user plane address of the IAB-donor node 30.

**S904.** The IAB node 32 sends a broadcast session establishment response message to the IAB-donor node 30. Correspondingly, the IAB-donor node 30 receives the broadcast session establishment response message from the IAB node 32.

Optionally, similar to the IAB node 31, the IAB node 32 may also send an uplink user plane address of the IAB node 32 to the IAB-donor node 30 through the broadcast session establishment response message. In this way, the IAB-donor node 30 may obtain the uplink user plane address of the IAB node 32.

In addition, optionally, the broadcast session establishment response message may further carry a downlink receive address of the IAB node 32. Correspondingly, the IAB-donor node 30 may obtain the downlink receive address of the IAB node 32 from the received broadcast session establishment response message. Based on this, the IAB-donor node 30 may send the downlink receive address of the IAB node 32 to the IAB node 31, to establish a user plane tunnel between the IAB node 31 and the IAB node 32. For example, the IAB node 31 sends the downlink user plane data to the IAB node 32 based on the downlink receive address of the IAB node 32; and correspondingly, the IAB node 32 receives the downlink user plane data of the IAB node 31.

It is described in S901 to S904 that the IAB-donor node 30 may obtain an uplink user plane address of each IAB node through a broadcast session establishment process of a control plane; and may notify the IAB node 32 of the uplink user plane address of the IAB node 31 based on the obtained uplink user plane address of the IAB node 31 in a process of establishing a broadcast session with the IAB node 32 (that is, the child node of the IAB node 31), so that the IAB node 32 can obtain the uplink user plane address of the IAB node 31, and uplink data, for example, uplink user plane feedback data, can be transmitted through a user plane.

Based on implementation processes of S901 and S904, the following describes, through S905 to S909, how the IAB node 32 sends uplink user plane data, for example, sends uplink user plane feedback data.

**S905.** The IAB-donor node 30 sends the downlink user plane data to the IAB node 31. Correspondingly, the IAB node 31 receives the downlink user plane data from the IAB-donor node 30.

For example, the downlink user plane data may be, for example, MBS data.

**S906.** The IAB node 31 caches the downlink user plane data.

It may be understood that, because the IAB node 31 has a user plane management function, the IAB node 31 may cache the downlink user plane data. Optionally, when the IAB node 31 receives a feedback that a child node fails to receive the downlink user plane data, data retransmission may be implemented based on the cached downlink user plane data.

**S907.** The IAB node 31 sends the downlink user plane data to the IAB node 32. Correspondingly, the IAB node 32 receives the downlink user plane data from the IAB node 31.

**S908.** The IAB node 32 sends an uplink feedback message to the IAB node 31 based on the uplink user plane address. Correspondingly, the IAB node 31 receives the uplink feedback message from the IAB node 32.

Optionally, when the IAB node 32 successfully receives the downlink user plane data, the uplink feedback message may indicate that a receiving status of the downlink user plane data is that the downlink user plane data is successfully received.

In addition, optionally, when the IAB node 32 fails to receive the downlink user plane data, the uplink feedback message may indicate that the receiving status of the downlink user plane data is that the downlink user plane data fails to be received (the downlink user plane data is not successfully received, or the like).

It should be noted that, in a current standard definition, the node hosting NR PDCP described in FIG. 8 corresponds to the IAB-donor node 30, that is, the CU in the IAB communication architecture. According to the method provided in this application, the node hosting NR PDCP may correspond to any IAB node that has a traffic control function (or may be understood as a capability of receiving an uplink feedback message of the user plane) in the IAB communication architecture. For example, the IAB node may include the IAB-donor node 30, or may include the IAB node 31. Correspondingly, the corresponding node is an IAB node that interacts with the node hosting NR PDCP. For example, in a scenario in which the IAB node 31 receives the uplink feedback message of the IAB node 32, the IAB node 32 is the corresponding node, and the IAB node 31 is the node hosting NR PDCP.

In a possible scenario, the IAB node 32 may obtain the uplink user plane address of the IAB node 31 and the uplink user plane address of the IAB-donor node 30 based on the broadcast session establishment request message in S903. In this scenario, the IAB node 32 may further send an uplink feedback message to the IAB-donor node 30 based on the uplink user plane address of the IAB-donor node 30. Alternatively, the IAB node 32 may determine, based on an indication of the IAB-donor node 30, to send an uplink feedback message to the IAB node 31 or the IAB-donor node 30. In this way, flexibility of performing uplink feedback by the IAB node 32 can be improved, and requirements of more service scenarios are met. For example, in some scenarios with a high requirement on an uplink feedback response, the IAB node 32 may be indicated to directly perform uplink feedback to the IAB-donor node 30.

**S909.** The IAB node 31 determines, based on the uplink feedback message, that the IAB node 32 successfully receives the downlink user plane data, and deletes the cached downlink user plane data.

In addition, optionally, when determining that the uplink feedback message indicates that the downlink user plane data is not successfully received, the IAB node 31 may retransmit the downlink user plane data to the IAB node 32.

According to the communication method shown in FIG. 9, the CU included in the IAB-donor base station in the IAB communication architecture may obtain, through the broadcast session establishment process of the control plane, an uplink user plane address of each IAB base station serving as a DU; and send the uplink user plane address of the IAB base station to another IAB base station in a process of establishing a broadcast session with the another IAB base station (that is, a child node of the IAB base station) on the control plane, so that uplink data can be transmitted between the IAB base stations. Therefore, according to the method, not only the IAB-donor base station has the traffic control function, but also another IAB base station other than the IAB-donor base station may have the traffic control function, for example, may implement management such as data retransmission, thereby reducing processing pressure of the IAB-donor base station.

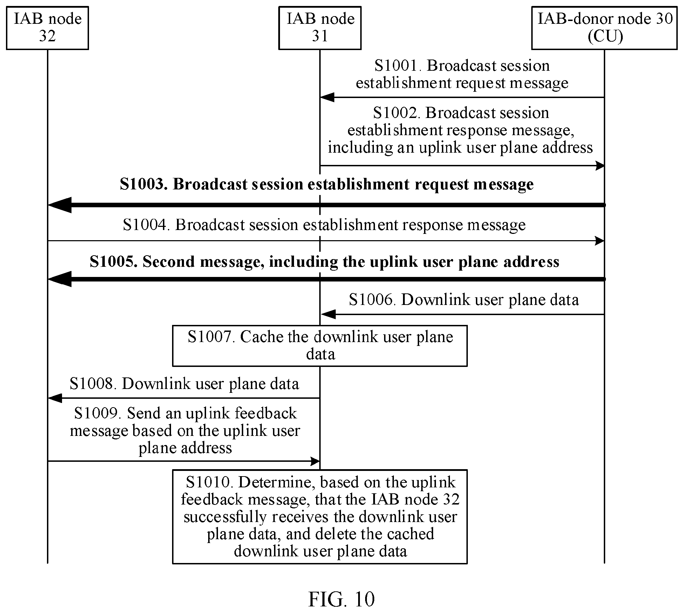

An embodiment of this application provides another communication method. FIG. 10 is a flowchart of the method. The procedure described in FIG. 10 is still described by using an IAB-donor node 30, an IAB node 31, and an IAB node 32 as an example, where the IAB node 31 is a child node of the IAB-donor node 30, and the IAB node 32 is a child node of the IAB node 31. It may be understood that, when another IAB node is used as a parent node, refer to content of the IAB node 31 described in this embodiment of this application. For example, the IAB node 32 may also be used as a parent node to connect to a downstream IAB node. When being used as a child node of another IAB node (which may also be understood as a node other than the IAB-donor node 30), refer to content of the IAB node 32 described in this embodiment of this application.

**S1001.** The IAB-donor node 30 sends a broadcast session establishment request message to the IAB node 31. Correspondingly, the IAB node 31 receives the broadcast session establishment request message from the IAB-donor node 30.

For example, a broadcast session may be established between the IAB-donor node 30 and the IAB node 31 according to a broadcast session establishment procedure in the existing TS 38.401 protocol. Details are not described in this application.

**S1002.** The IAB node 31 sends a broadcast session establishment response message to the IAB-donor node 30, where the broadcast session establishment response message includes an uplink user plane address. Correspondingly, the IAB-donor node 30 receives the broadcast session establishment response message from the IAB node 31.

For example, the uplink user plane address is used to receive uplink user plane data. For example, the user plane data may be feedback data, and the feedback data may be used to feed back a receiving status of downlink user plane data. For example, the uplink user plane address may be represented by a new UL TNL address. The new UL TNL address is used to receive uplink user plane feedback data from the child node, and for example, used by the IAB node 31 to receive uplink user plane feedback data from the IAB node 32.

Optionally, the broadcast session establishment response message may further carry a downlink receive address (English name: F1-U TNL DU) of the IAB node 31, and the F1-U TNL DU may be used to receive downlink user plane data of the parent node. For example, the IAB-donor node 30 sends downlink user plane data to the IAB node 31 based on the F1-U TNL DU; and correspondingly, the IAB node 31 receives the downlink user plane data of the IAB-donor node 30.

**S1003.** The IAB-donor node 30 sends a broadcast session establishment request message to the IAB node 32. Correspondingly, the IAB node 32 receives the broadcast session establishment request message from the IAB-donor node 30.

**S1004.** The IAB node 32 sends a broadcast session establishment response message to the IAB-donor node 30. Correspondingly, the IAB-donor node 30 receives the broadcast session establishment response message from the IAB node 32.

Optionally, similar to the IAB node 31, the IAB node 32 may also send an uplink user plane address of the IAB node 32 to the IAB-donor node 30 through the broadcast session establishment response message. In this way, the IAB-donor node 30 may obtain the uplink user plane address of the IAB node 32.

In addition, optionally, the broadcast session establishment response message may further carry a downlink receive address of the IAB node 32. Correspondingly, the IAB-donor node 30 may obtain the downlink receive address of the IAB node 32 from the received broadcast session establishment response message. Based on this, the IAB-donor node 30 may send the downlink receive address of the IAB node 32 to the IAB node 31, to establish a user plane tunnel between the IAB node 31 and the IAB node 32. For example, the IAB node 31 sends the downlink user plane data to the IAB node 32 based on the downlink receive address of the IAB node 32; and correspondingly, the IAB node 32 receives the downlink user plane data of the IAB node 31.

It is described in S1001 to S1004 that the IAB-donor node 30 may obtain an uplink user plane address of each IAB node through a broadcast session establishment process of a control plane.

**S1005.** The IAB-donor node 30 sends a second message to the IAB node 32, where the second message includes the uplink user plane address of the IAB node 31, that is, the new UL TNL address of the IAB node. Correspondingly, the IAB node 32 receives the second message from the IAB-donor node 30.

For example, the IAB-donor node 30 may not only bear the new UL TNL address of the IAB node 31 through the broadcast session establishment request message, but also bear the new UL TNL address of the IAB node 31 through a separate control plane message (for example, the second message).

Optionally, the second message may further include an uplink user plane address of the IAB-donor node 30. In this way, the IAB node 32 may not only obtain the uplink user plane address of the parent node, but also obtain the uplink user plane address of the IAB-donor node 30.

Based on implementation processes of S1001 and S1005, the following describes, through S1006 to S1010, how the IAB node 32 sends uplink user plane data, for example, sends uplink user plane feedback data.

**S1006.** The IAB-donor node 30 sends the downlink user plane data to the IAB node 31. Correspondingly, the IAB node 31 receives the downlink user plane data from the IAB-donor node 30.

For example, the downlink user plane data may be, for example, MBS data.

**S1007.** The IAB node 31 caches the downlink user plane data.

It may be understood that, because the IAB node 31 has a user plane management function, the IAB node 31 may cache the downlink user plane data. Optionally, when the IAB node 31 receives a feedback that a child node fails to receive the downlink user plane data, data retransmission may be implemented based on the cached downlink user plane data.

**S1008.** The IAB node 31 sends the downlink user plane data to the IAB node 32. Correspondingly, the IAB node 32 receives the downlink user plane data from the IAB node 31.

**S1009.** The IAB node 32 sends an uplink feedback message to the IAB node 31 based on the uplink user plane address. Correspondingly, the IAB node 31 receives the uplink feedback message from the IAB node 32.

Optionally, when the IAB node 32 successfully receives the downlink user plane data, the uplink feedback message may indicate that a receiving status of the downlink user plane data is that the downlink user plane data is successfully received.

In addition, optionally, when the IAB node 32 fails to receive the downlink user plane data, the uplink feedback message may indicate that the receiving status of the downlink user plane data is that the downlink user plane data fails to be received (or the downlink user plane data is not successfully received).

It should be noted that, in a current standard definition, the node hosting NR PDCP described in FIG. 8 corresponds to the IAB-donor node 30, that is, the CU in the IAB communication architecture. According to the method provided in this application, the node hosting NR PDCP may correspond to any IAB node that has a traffic control function (or may be understood as a capability of receiving an uplink feedback message of a user plane) in the IAB communication architecture. For example, the IAB node may include the IAB-donor node 30, or may include the IAB node 31. Correspondingly, the corresponding node is an IAB node that interacts with the node hosting NR PDCP. For example, in a scenario in which the IAB node 31 receives the uplink feedback message of the IAB node 32, the IAB node 32 is the corresponding node, and the IAB node 31 is the node hosting NR PDCP.

In a possible scenario, the IAB node 32 may obtain the uplink user plane address of the IAB node 31 and the uplink user plane address of the IAB-donor node 30 based on the second message in S1005. In this scenario, the IAB node 32 may further send an uplink feedback message to the IAB-donor node 30 based on the uplink user plane address of the IAB-donor node 30. Alternatively, the IAB node 32 may determine, based on an indication of the IAB-donor node 30, to send an uplink feedback message to the IAB node 31 or the IAB-donor node 30. In this way, flexibility of performing uplink feedback by the IAB node 32 can be improved, and requirements of more service scenarios are met. For example, in some scenarios with a high requirement on an uplink feedback response, the IAB node 32 may be indicated to directly perform uplink feedback to the IAB-donor node 30.

**S1010.** The IAB node 31 determines, based on the uplink feedback message, that the IAB node 32 successfully receives the downlink user plane data, and deletes the cached downlink user plane data.

In addition, optionally, when determining that the uplink feedback message indicates that the downlink user plane data is not successfully received, the IAB node 31 may retransmit the downlink user plane data to the IAB node 32.

According to the communication method shown in FIG. 10, the CU included in the IAB-donor base station in the IAB communication architecture may obtain, through a multicast or broadcast session establishment process of the control plane, an uplink user plane address of each IAB base station serving as a DU. Then, the uplink user plane address of the IAB base station is sent to another IAB base station (that is, a child node of the IAB base station) through a control plane message, so that uplink data, for example, uplink user plane feedback data, may be transmitted between the IAB base stations. Therefore, according to the method, not only the IAB-donor base station has the traffic control function, but also another IAB base station other than the IAB-donor base station may have the traffic control function, for example, may implement management such as data retransmission, thereby reducing processing pressure of the IAB-donor base station.

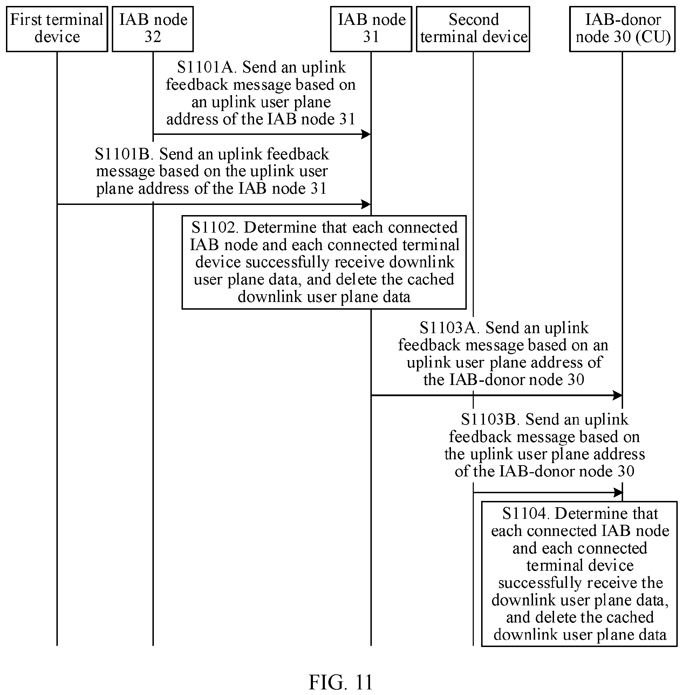

An embodiment of this application provides another communication method. FIG. 11 is a flowchart of the method. For an implementation process in which an IAB node obtains an uplink user plane address, refer to the content described in FIG. 9 and FIG. 10. The content is not described again. Considering complexity of an IAB communication architecture, the IAB node may not only be connected to one or more downstream IAB nodes, but also be connected to one or more downstream terminal devices. In FIG. 11, an example in which an IAB node 31 is not only connected to a downstream IAB node 32, but also connected to a first terminal device, and an IAB-donor node 30 is not only connected to the IAB node 31, but also connected to a second terminal device is used.

**S1101A.** The IAB node 32 sends an uplink feedback message to the IAB node 31 based on an uplink user plane address of the IAB node 31. Correspondingly, the IAB node 31 receives the uplink feedback message from the IAB node 32.

It should be noted that, for another IAB node connected to the IAB node 31, refer to the IAB node 32, which sends the uplink feedback message to the IAB node 31. For example, an IAB node 33 sends an uplink feedback message to the IAB node 31 based on the uplink user plane address of the IAB node 31. Correspondingly, the IAB node 31 receives the uplink feedback message from the IAB node 33.

For example, the IAB node 32 may receive, through a radio bearer, downlink user plane data sent by the IAB node 31 in a multicast or broadcast manner.

Optionally, when the IAB node 32 successfully receives the downlink user plane data, the uplink feedback message may indicate that a receiving status of the downlink user plane data is that the downlink user plane data is successfully received. In addition, optionally, when the IAB node 32 fails to receive the downlink user plane data, the uplink feedback message may alternatively indicate that the receiving status of the downlink user plane data is that the downlink user plane data is not successfully received (or the downlink user plane data fails to be received). For example, the uplink feedback message may be a DOWNLINK DATA DELIVERY STATUS frame (or a DL DATA DELIVERY STATUS frame), to indicate the receiving status of the downlink user plane data.

**S1101B.** The first terminal device sends an uplink feedback message to the IAB node 31 based on the uplink user plane address of the IAB node 31. Correspondingly, the IAB node 31 receives the uplink feedback message from the first terminal device.

It should be noted that, for another terminal device connected to the IAB node 31, refer to the first terminal device, which sends the uplink feedback message to the IAB node 31.

For example, the first terminal device may receive, over an air interface, the downlink user plane data from the IAB node 31. When the first terminal device is configured with an acknowledged mode (acknowledged mode, AM), the first terminal device needs to perform uplink feedback.

Optionally, when the first terminal device successfully receives the downlink user plane data, the uplink feedback message may indicate that a receiving status of the downlink user plane data is that the downlink user plane data is successfully received. In addition, optionally, when the first terminal device fails to receive the downlink user plane data, the uplink feedback message may alternatively indicate that the receiving status of the downlink user plane data is that the downlink user plane data is not successfully received (or the downlink user plane data fails to be received).

**S1102.** The IAB node 31 determines that each connected IAB node and each connected terminal device successfully receive the downlink user plane data, and deletes the cached downlink user plane data. The IAB node connected to the IAB node 31 may include, for example, the IAB node 32 and the IAB node 33, and the terminal device connected to the IAB node 31 may include, for example, the first terminal device. It may be understood that, the IAB node 31 determines that the IAB node 32, the IAB node 33, and the first terminal device all successfully receive the downlink user plane data, and deletes the cached downlink user plane data. It may be further understood that, if the IAB node 31 determines that at least one of the IAB node 32, the IAB node 33, and the first terminal device fails to receive the downlink user plane data, data retransmission may be performed based on the cached downlink user plane data.

**S1103A.** The IAB node 31 sends an uplink feedback message to the IAB-donor node 30 based on an uplink user plane address of the IAB-donor node 30. Correspondingly, the IAB-donor node 30 receives the uplink feedback message from the IAB node 31.

It should be noted that, for another IAB node connected to the IAB-donor node 30, refer to the IAB node 31, which sends the uplink feedback message to the IAB-donor node 30. For example, the IAB node 33 sends an uplink feedback message to the IAB-donor node 30 based on the uplink user plane address of the IAB-donor node 30. Correspondingly, the IAB-donor node 30 receives the uplink feedback message from the IAB node 34.

For example, the IAB node 31 may receive downlink user plane data from the IAB-donor node 30 through a radio bearer.

Optionally, when the IAB node 31 successfully receives the downlink user plane data, the uplink feedback message may indicate that a receiving status of the downlink user plane data is that the downlink user plane data is successfully received. In addition, optionally, when the IAB node 31 fails to receive the downlink user plane data, the uplink feedback message may alternatively indicate that the receiving status of the downlink user plane data is that the downlink user plane data is not successfully received (or the downlink user plane data fails to be received). For example, the uplink feedback message may be a DOWNLINK DATA DELIVERY STATUS frame (or a DL DATA DELIVERY STATUS frame), to indicate the receiving status of the downlink user plane data.

**S1103B.** The second terminal device sends an uplink feedback message to the IAB-donor node 30 based on the uplink user plane address of the IAB-donor node 30. Correspondingly, the IAB-donor node 30 receives the uplink feedback message from the second terminal device.

It should be noted that, for another terminal device connected to the IAB-donor node 30, refer to the second terminal device, which sends the uplink feedback message to the IAB-donor node 30.

For example, the second terminal device may receive, over an air interface, the downlink user plane data from the IAB-donor node 30. When the second terminal device is configured with an AM, the second terminal device needs to perform uplink feedback.

Optionally, when the second terminal device successfully receives the downlink user plane data, the uplink feedback message may indicate that a receiving status of the downlink user plane data is that the downlink user plane data is successfully received. In addition, optionally, when the second terminal device fails to receive the broadcast or multicast downlink user plane data, the uplink feedback message may alternatively indicate that the receiving status of the downlink user plane data is that the downlink user plane data is not successfully received (or the downlink user plane data fails to be received).

**S1104.** The IAB-donor node 30 determines that each connected IAB node and each connected terminal device successfully receive the downlink user plane data, and deletes the cached downlink user plane data.

The IAB node connected to the IAB-donor node 30 may include, for example, the IAB node 31 and the IAB node 34, and the terminal device connected to the IAB-donor node 30 may include, for example, the second terminal device. It may be understood that, the IAB-donor node 30 determines that the IAB node 31, the IAB node 34, and the second terminal device all successfully receive the downlink user plane data, and deletes the cached downlink user plane data. It may be further understood that, if the IAB-donor node 30 determines that at least one of the IAB node 31, the IAB node 34, and the second terminal device fails to receive the downlink user plane data, data retransmission may be performed based on the cached downlink user plane data.

According to the content described in FIG. 11, the IAB node 31 may implement traffic control. Therefore, according to the method provided in this embodiment of this application, processing pressure of traffic control of the IAB-donor node 30 can be reduced.

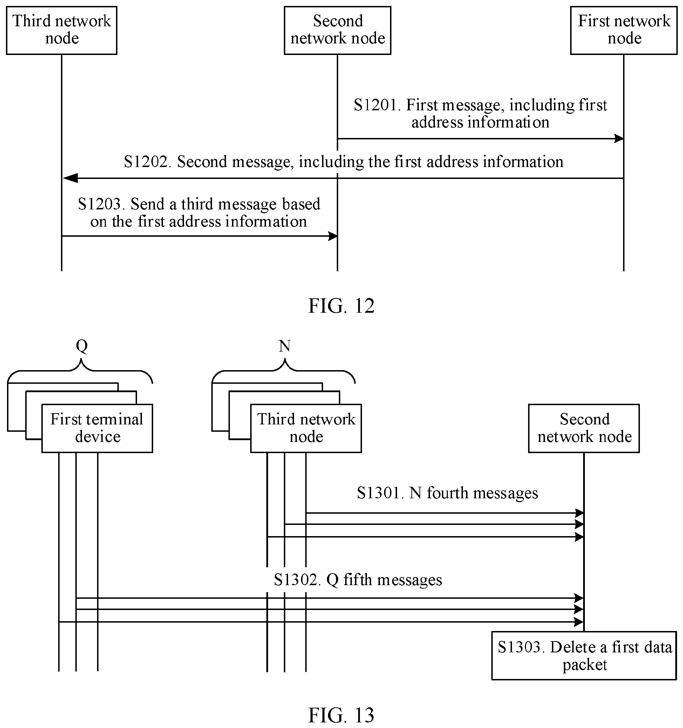

An embodiment of this application provides still another communication method. FIG. 12 is a flowchart of the method.

**S1201.** A first network node receives a first message from a second network node, where the first message includes first address information. Correspondingly, the second network node sends the first message to the first network node.

The second network node is a child node of the first network node. For example, the first network node may be the IAB-donor node 30 described in the foregoing embodiments, and the second network node may be the IAB node 31 described in the foregoing embodiments. For example, in a broadcast scenario, the first message may be a broadcast session establishment response message sent by the IAB node 31 to the IAB-donor node 30; or in a scenario in which a multicast manner is multicast, the first message may alternatively be a multicast session establishment request message sent by the IAB node 31 to the IAB-donor node 30; or may be another message or a separate message sent by the IAB node 31 to the IAB-donor node 30 on a control plane.

**S1202.** The first network node sends a second message to a third network node, where the second message includes the first address information. Correspondingly, the third network node receives the second message from the first network node.

The third network node is a child node of the second network node. For example, the third network node may be the IAB node 32 described in the foregoing embodiments. For example, in the broadcast scenario, the second message may be a broadcast session establishment request message sent by the IAB-donor node 30 to the IAB node 32; or in the scenario in which the multicast manner is multicast, the second message may be a multicast session establishment response message sent by the IAB-donor node 30 to the IAB node 32; or may be another message or a separate message sent by the IAB-donor node 30 to the IAB node 32 on the control plane.

**S1203.** The third network node sends a third message to the second network node based on the first address information, where the third message includes a receiving status of downlink data, and the downlink data is broadcast data or multicast data from the first network node. For example, the receiving status of the downlink data may be classified into that the downlink data is successfully received or that the downlink data is not successfully received.

Correspondingly, the second network node receives the third message from the third network node. Optionally, when the third message indicates that the receiving status of the downlink data is that the downlink data is not successfully received, the downlink data may be retransmitted to the third network node based on the cached downlink data. In addition, optionally, when the third message indicates that the receiving status of the downlink data is that the downlink data is successfully received, it may be determined that the third network node successfully receives the downlink data.

For a processing process of the second network node on an uplink feedback message, refer to FIG. 13, which is a flowchart of the method.

**S1301.** The second network node receives N fourth messages from N child nodes, where the fourth message includes a receiving status of the downlink data. For example, the N child nodes may be a downstream IAB node connected to the IAB node 31. Therefore, it may be understood that the N child nodes include the third network node, the N fourth messages include the third message, the receiving status is that the downlink data is successfully received, and N is a positive integer.

**S1302.** The second network node receives Q fifth messages from Q first terminal devices, where the fifth message includes a receiving status of the downlink data. For example, the Q first terminal devices may be a terminal device connected to the IAB node 31. For example, the receiving status is that the downlink data is successfully received, and Q is a positive integer.

It should be noted that an execution sequence of S1301 and S1302 is not limited in this application.

**S1303.** The second network node deletes a first data packet, where the first data packet includes data packets corresponding to the N child nodes and the Q first terminal devices, and the first data packet includes the downlink data. For example, the first data packet is a downlink data packet cached on the IAB node 31.

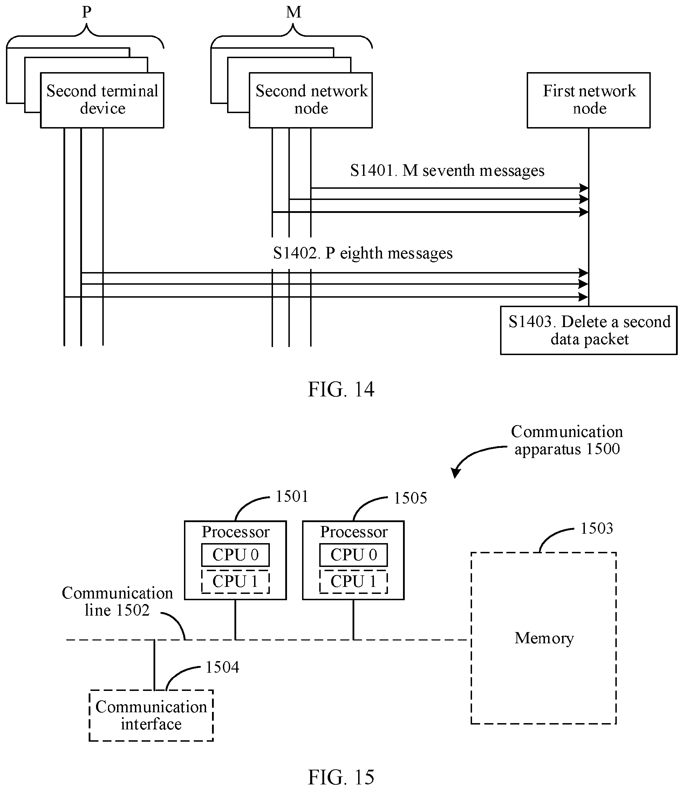

Further, after determining that the second network node and the N child nodes and the Q first terminal devices that are connected to the second network node successfully receive the downlink data, the second network node may further perform uplink feedback to the first network node. For a processing process of the first network node on an uplink feedback message, refer to FIG. 14, which is a flowchart of the method.

**S1401.** The first network node receives M seventh messages from M child nodes, where the seventh message includes a receiving status of the downlink data. For example, the M child nodes may be a downstream IAB node connected to the IAB-donor node 30. Therefore, it may be understood that the M child nodes include the second network node, and M is a positive integer.

**S1402.** The first network node receives P eighth messages from P second terminal devices, where the eighth message includes a receiving status of the downlink data. For example, the P second terminal devices may be a terminal device connected to the IAB-donor node 30. For example, the receiving status is that the downlink data is successfully received, and P is a positive integer.

It should be noted that an execution sequence of S1401 and S1402 is not limited in this application.

**S1403.** The first network node deletes a second data packet, where the second data packet includes data packets corresponding to the M child nodes and the P second terminal devices, and the second data packet includes the downlink data. For example, the second data packet is a downlink data packet cached on the IAB-donor node 30.

FIG. 15 is a diagram of a structure of a communication apparatus according to an embodiment of this application. The communication apparatus 1500 may be the network node in the embodiment shown in any one of FIG. 9 to FIG. 14 or a circuit system of the network node, and is configured to implement the method corresponding to the network node in the foregoing method embodiments. The network node may be a first network node (for example, the IAB-donor node 30 in the foregoing embodiments), or may be a second network node (for example, the IAB node 31 in the foregoing embodiments), or may be a third network node (for example, the IAB node 32 in the foregoing embodiments). Alternatively, the communication apparatus 1500 may be a circuit system of any network node in the embodiment shown in any one of FIG. 9 to FIG. 14, and is configured to implement the method corresponding to the network node in the foregoing method embodiments. For example, the circuit system is a chip system.

The communication apparatus 1500 includes at least one processor 1501. The processor 1501 may be configured to perform internal processing of the apparatus, to implement a specific control processing function. Optionally, the processor 1501 includes instructions. Optionally, the processor 1501 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1500 includes one or more memories 1503 that are configured to store instructions. Optionally, the memory 1503 may further store data. The processor and the memory may be separately deployed, or may be integrated together.

Optionally, the communication apparatus 1500 includes a communication line 1502 and at least one communication interface 1504. Because the memory 1503, the communication line 1502, and the communication interface 1504 are all optional, the components are all represented by dashed lines in FIG. 15.

Optionally, the communication apparatus 1500 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 1500 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 1501 may include a general-purpose central processing unit (central processing unit, CPU), a microprocessor, an application-specific integrated circuit (application-specific integrated circuit, ASIC), or one or more integrated circuits configured to control program execution of solutions of this application.

The communication line 1502 may include a path for transferring information between the foregoing components.

The communication interface 1504 is any apparatus like a transceiver, and is configured to communicate with another device or a communication network, for example, an Ethernet, a radio access network (radio access network, RAN), a wireless local area network (wireless local area network, WLAN), or a wired access network.

The memory 1503 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer, but is not limited thereto. The memory 1503 may exist independently, and is connected to the processor 1501 through the communication line 1502. Alternatively, the memory 1503 may be integrated with the processor 1501.

The memory 1503 is configured to store computer-executable instructions for executing the solutions of this application, and the processor 1501 controls the execution. The processor 1501 is configured to execute the computer-executable instructions stored in the memory 1503, to implement the steps performed by the first network node and/or the second network node and/or the third network node in the embodiment shown in any one of FIG. 9 to FIG. 14.

Optionally, the computer-executable instructions in this embodiment of this application may also be referred to as application program code. This is not specifically limited in this embodiment of this application.

During specific implementation, in an embodiment, the processor 1501 may include one or more CPUs such as a CPU 0 and a CPU 1 in FIG. 15.

During specific implementation, in an embodiment, the communication apparatus 1500 may include a plurality of processors, for example, the processor 1501 and a processor 1505 in FIG. 15. Each of the processors may be a single-core (single-CPU) processor, or may be a multicore (multi-CPU) processor. The processor herein may be one or more devices, circuits, and/or processing cores configured to process data (for example, computer program instructions).

When the apparatus shown in FIG. 15 is a chip, for example, a chip of a first network node (or a first network device in which the first network node is located), a chip of a second network node (or a second network device in which the second network node is located), or a chip of a third network node (or a third network device in which the third network node is located), the chip includes a processor 1501 (and may further include a processor 1505), a communication line 1502, and a communication interface 1504. Optionally, the chip may include a memory 1503. Specifically, the communication interface 1504 may be an input interface, a pin, a circuit, or the like. The memory 1503 may be a register, a cache, or the like. The processor 1501 and the processor 1505 each may be a general-purpose CPU, a microprocessor, an ASIC, or one or more integrated circuits configured to control program execution of the communication method in any one of the foregoing embodiments.

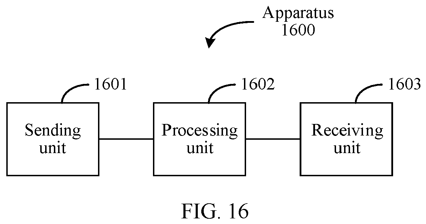

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used. For example, when each functional module is obtained through division based on each corresponding function, FIG. 16 is a diagram of an apparatus. The apparatus 1600 may be a first network node (or a first network device in which the first network node is located), a second network node (or a second network device in which the second network node is located), a third network node (or a second network device in which the second network node is located) in the foregoing method embodiments, or a chip in the first network node (or the first network device in which the first network node is located), a chip in the second network node (or the second network device in which the second network node is located), or a chip in the third network node (or the third network device in which the third network node is located). The apparatus 1600 includes a sending unit 1601, a processing unit 1602, and a receiving unit 1603.

It should be understood that the apparatus 1600 may be configured to implement steps performed by the first network node, the second network node, or the third network node in the communication method in embodiments of this application. For related features, refer to the embodiment shown in any one of FIG. 9 to FIG. 14. Details are not described herein again.

Optionally, functions/implementation processes of the sending unit 1601, the receiving unit 1603, and the processing unit 1602 in FIG. 16 may be implemented by the processor 1501 in FIG. 15 by invoking the computer-executable instructions stored in the memory 1503. Alternatively, a function/an implementation process of the processing unit 1602 in FIG. 16 may be implemented by the processor 1501 in FIG. 15 by invoking the computer-executable instructions stored in the memory 1503, and functions/implementation processes of the sending unit 1601 and the receiving unit 1603 in FIG. 16 may be implemented through the communication interface 1504 in FIG. 15.

Optionally, when the apparatus 1600 is a chip or a circuit, the functions/implementation processes of the sending unit 1601 and the receiving unit 1603 may be implemented through a pin, a circuit, or the like.

This application further provides a computer-readable storage medium. The computer-readable storage medium stores a computer program or instructions. When the computer program or the instructions are run, the method performed by the first network node and/or the second network node and/or the third network node in the foregoing method embodiments is implemented. In this way, the functions in the foregoing embodiments may be implemented in a form of a software functional unit and sold or used as an independent product. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code such as a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the first network node and/or the second network node and/or the third network node in any one of the foregoing method embodiments.

An embodiment of this application further provides a processing apparatus, including a processor and an interface. The processor is configured to perform the method performed by the first network node and/or the second network node and/or the third network node in any one of the foregoing method embodiments.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

Various illustrative logical units and circuits described in embodiments of this application may implement or operate the described functions via a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information into the storage medium. Optionally, the storage medium may be integrated into a processor. The processor and the storage medium may be deployed in an ASIC, and the ASIC may be deployed in a terminal device. Optionally, the processor and the storage medium may alternatively be deployed in different parts of a terminal device.

These computer program instructions may also be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or in one or more blocks in the block diagrams.

Content in embodiments of this application may be mutually referenced. Unless otherwise specified or there is a logical conflict, terms and/or descriptions in different embodiments are consistent and may be mutually referenced, and technical features in different embodiments may be combined based on an internal logical relationship thereof to form a new embodiment.

It may be understood that, in embodiments of this application, the first network node and/or the second network node and/or the third network node may perform a part or all of the steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

## Claims

1. A communication method, comprising:
receiving, by a first network node, a first message from a second network node, wherein the first message comprises first address information;
sending, by the first network node, a second message to a third network node, wherein the second message comprises the first address information; and
sending, by the third network node, a third message to the second network node based on the first address information, wherein the third message comprises a receiving status of downlink data, and the downlink data is broadcast data or multicast data from the first network node; and
the second network node is a child node of the first network node, and the third network node is a child node of the second network node.

2. The method according to claim 1, further comprising:
receiving, by the second network node, N fourth messages from N child nodes, wherein the fourth message comprises a receiving status of the downlink data, the N child nodes comprise the third network node, the N fourth messages comprise the third message, the receiving status is that the downlink data is successfully received, and N is a positive integer;
receiving, by the second network node, Q fifth messages from Q first terminal devices, wherein the fifth message comprises a receiving status of the downlink data, the receiving status is that the downlink data is successfully received, the first terminal device is a terminal device connected to the second network node, and Q is a positive integer; and
deleting, by the second network node, a first data packet, wherein the first data packet comprises data packets corresponding to the N child nodes and the Q first terminal devices, and the first data packet comprises the downlink data.

3. The method according to claim 1 or 2, further comprising:
sending, by the second network node, a sixth message to the first network node, wherein the sixth message comprises a receiving status of the downlink data, and the receiving status is that the downlink data is successfully received.

4. The method according to any one of claims 1 to 3, further comprising:
receiving, by the first network node, M seventh messages from M child nodes, wherein the seventh message comprises a receiving status of the downlink data, the receiving status is that the downlink data is successfully received, the M child nodes comprise the second network node, and M is a positive integer;
receiving, by the first network node, P eighth messages from P second terminal devices, wherein the eighth message comprises a receiving status of the downlink data, the receiving status is that the downlink data is successfully received, the second terminal device is a terminal device connected to the first network node, and P is a positive integer; and
deleting, by the first network node, a second data packet, wherein the second data packet comprises data packets corresponding to the M child nodes and the P second terminal devices, and the second data packet comprises the downlink data.

5. The method according to any one of claims 1 to 4, wherein before the sending, by the third network node, the third message to the second network node based on the first address information, the method further comprises:
receiving, by the second network node, the downlink data from the first network node;
caching, by the second network node, the downlink data; and
sending, by the second network node, the downlink data to the third network node.

6. The method according to any one of claims 1 to 5, wherein
the first network node is an integrated access and backhaul IAB-donor node;
the second network node is a first IAB node; and
the third network node is a second IAB node.

7. The method according to claim 6, wherein the first network node comprises a central unit CU of the IAB-donor node.

8. The method according to any one of claims 1 to 7, wherein the first message is a broadcast session establishment response message.

9. The method according to any one of claims 1 to 8, wherein the second message is a broadcast session establishment request message; or the second message is a multicast session establishment response message.

10. A communication apparatus, wherein the communication apparatus comprises a processing unit and a transceiver unit, and the processing unit is coupled to the transceiver unit, to perform the method performed by the first network node according to any one of claims 1 to 9, or perform the method performed by the second network node according to any one of claims 1 to 9, or perform the method performed by the third network node according to any one of claims 1 to 9.

11. A communication apparatus, wherein the communication apparatus comprises a processor and a memory, the memory is configured to store a computer program, and the processor is configured to execute the computer program stored in the memory, to cause the communication apparatus to perform the method performed by the first network node according to any one of claims 1 to 9, or cause the communication apparatus to perform the method performed by the second network node according to any one of claims 1 to 9, or cause the communication apparatus to perform the method performed by the third network node according to any one of claims 1 to 9.

12. A computer-readable storage medium, wherein the computer-readable storage medium is configured to store a computer program, and when the computer program is run on a computer, the computer is caused to perform the method performed by the first network node according to any one of claims 1 to 9, or the computer is caused to perform the method performed by the second network node according to any one of claims 1 to 9, or the computer is caused to perform the method performed by the third network node according to any one of claims 1 to 9.

13. A computer program product, wherein the computer program product comprises a computer program, and when the computer program is run on a computer, the computer is caused to perform the method performed by the first network node according to any one of claims 1 to 9, or the computer is caused to perform the method performed by the second network node according to any one of claims 1 to 9, or the computer is caused to perform the method performed by the second network node according to any one of claims 1 to 9.

14. A chip system, wherein the chip system comprises:
a processor and an interface, wherein the processor is configured to invoke and run instructions from the interface; and when the processor executes the instructions, the method performed by the first network node according to any one of claims 1 to 9 is implemented, or the method performed by the second network node according to any one of claims 1 to 9 is implemented, or the method performed by the third network node according to any one of claims 1 to 9 is implemented.

15. A communication system, wherein the communication system comprises a first network node, a second network node, and a third network node, wherein
the first network node is configured to perform the method performed by the first network node according to any one of claims 1 to 9, the second network node is configured to perform the method performed by the second network node according to any one of claims 1 to 9, and the third network node is configured to perform the method performed by the third network node according to any one of claims 1 to 9.
